# EUROPEAN PATENT SPECIFICATION

(11) **EP 3 009 898 B1**
(45) Date of publication and mention of the grant of the patent: **19.04.2017**
(21) Application number: 14189099.6
(22) Date of filing: 15.10.2014
(51) Int. Cl.: G05B 19/4093, G05B 13/02

(54) **Automatically controlled method for forging a workpiece.**
Automatisch gesteuertes Verfahren zum Schmieden eines Werkstücks
Procédé de commande automatique pour forger une pièce à usiner

(43) Date of publication of application: 20.04.2016
(73) Proprietor: Vea S.r.l., 20010 Canergrate, MI (IT)
(72) Inventor: Rosi, Fabio, 20010 Canegrate MI (IT)
(74) Representative: Acco, Stefania

(56) References cited:
- POLYBLANK JAMES A ET AL: "Closed-loop control of product properties in metal forming: A review and prospectus", JOURNAL OF MATERIALS PROCESSING TECHNOLOGY, vol. 214, no. 11, 24 April 2014 (2014-04-24), pages 2333-2348, XP029036304, ISSN: 0924-0136, DOI: 10.1016/J.JMATPROTEC.2014.04.014
- LILLY K W ET AL: "Dynamic simulation and neural network compliance control of an intelligent forging center", JOURNAL OF INTELLIGENT AND ROBOTIC SYSTEMS, KLUWER DORDRECHT, NL, vol. 17, no. 1, 1 September 1996 (1996-09-01), pages 81-99, XP008175588, ISSN: 0921-0296, DOI: 10.1007/BF00435717
- T. J. NYE, A. M. ELBADAN, AND G. M. BONE: "Real-Time Process Characterization of Open Die Forging for Adaptive Control", JOURNAL OF ENGINEERING MATERIALS AND TECHNOLOGY, vol. 123, no. 4, 31 October 2001 (2001-10-31), pages 511-516, XP002737593, DOI: 10.1115/1.1396350

## Description

### Field of the invention

The present invention relates to an automatically controlled method for forging a blank into a final piece by using an incremental open-die forging system.

### Related Art

As generally known in the art, an incremental open-die forging system allows a hot blank that exits from a furnace to be forged through the control of a manipulator and a press or a hammer. The blanks to be forged usually have an elongate shape, such as those for manufacturing railroad axles, and they are gripped by the manipulator to be fed and rotated under the press.

In incremental open-die forging, the hot workpiece goes into a press with so-called "cogging" dies, and it is partially pressed at each action of the press and displaced by the manipulator to assume preset dimensions in the various longitudinal portions where it is worked.

In a manually controlled forging process, the piece is rotated and displaced by the manipulator, which is controlled by the operator by means of manual dimensional measurements. Particularly, during the working cycles, the operator in real time and by using mechanical and optical references defines the actions that are most suitable for obtaining the preset dimensions in the various worked areas of the workpiece.

While the manually controlled forging process provides satisfactory results in certain respects, it still suffers from a few drawbacks.

The operators should have a good expertise in the forging techniques, to prepare for the subsequent pressing or moving forward actions in very short times and therefore the quality of the finished piece largely depends on the skills and expertise of each operator.

The manual control of the manipulator and the press may lead to finished pieces with dimensional inaccuracy.

The operator is required to derive the dimensions of each portion during the working cycle in a difficult situation, due to both the short time he/she is allowed, from 1 to 3 seconds, and for the available means, which often consist of optical targets. To avoid the error of creating undersized portions or areas, which might irreversibly affect the quality of the finished piece, the operator controls to maintain an oversize as compared with the required dimensions. Since undersized areas cannot be recovered in later processing, the workpiece must be eventually discarded, thereby increasing manufacturing costs.

Nevertheless, oversizing leads to metal allowances that involve an economic burden in terms of time and cost increase, due to both the use of excess material and to additional later steps, e.g. a turning step, required to reduce the finished piece to the preset required dimensions.

A further drawback is that hot-working of pieces and the need of various corrections may lead to torque stresses on the material, which would eventually increase the probability of cracking.

Semi-automatic control of the forging process, which has some operation steps with fixed and automated actions, allows the execution of programmed repetitive action cycles during the forging process. However, repetitive action cycles do not take into full account the characteristics and the specific deformations of the workpiece during forging, which are specific and depend on a few unforeseeable parameters, e.g. changes in the raw material, the shape of the workpiece obtained after a particular forging step, the workpiece temperature, the ambient temperature and other parameters.

Therefore, semi-automatic systems still require the presence of an operator who changes to the system parameters during the working steps through a manual and real-time assessment of the working process. The obtained pieces may suffer from the above mentioned drawbacks, namely the provision of excessive metal allowances to prevent the formation of undersized areas and/or the need to discard the final piece, when it is judged to have final dimensions outside an accepted tolerance. The paper "Closed-loop control of product properties in metal forming: A review and prospectus", Journal of Materials Processing Technology, J. A. Polyblank, J. M. Allwood, S. R. Duncan aims to motivate a new wave of interest in applying closed-loop control of product properties to metal forming processes. A novel framework is developed to show metal forming processes at the heart of an outer control loop, and existing applications are reviewed. Surveys of sensors, actuators and modelling techniques reveal a rich seam of opportunities for new developments. The Applicant has understood that a fully automatic control method is possible if the operation steps of the forging process are adaptive to the actual conditions of the workpiece being formed.

### Summary of the invention

In general terms, the present invention provides an automatic control of an open-die forging system comprising a plurality of actuators for forging a blank into a finished piece, such as a manipulator and a press, in which the control is throughout the forging process to transform the shape and therefore the dimensions of a blank to be forging in a shape and therefore in the dimensions of a finished piece. Within the present description and claims, with "blank" it is meant an unworked piece of material, i.e. before being subject to any working process that changes its shape. Generally, the blank has a simple geometric shape, typically a cylindrical shape, although other shapes are not excluded, such as a parallelepiped. The piece of material being processed is herein indicated with "workpiece", whereas the object or piece obtained after completion of the forging process is referred to as "final piece", "worked piece" or "finished piece". It is understood that the "blank" is a particular "workpiece" in an initial condition, i.e. before any processing.

The forging process comprises at least one sequence of operation steps comprising a sequence of forging steps. In some preferred embodiments, the forging process is defined as a plurality of sequences of operations steps, wherein each sequence of steps includes forging steps that at least partially modifies the workpiece, for example by deformation and/or displacement of material. More generally, the forging process can be defined by a plurality of operation steps comprising a plurality of forging steps, comprising a first and a last forging step, the first forging step starting from a blank and the last forging step producing the finished piece having a final shape, wherein each forging step at least partially modifies the shape of the workpiece into an intermediate shape, which is targeted to the achievement of the final shape. Typically, but not exclusively, the plurality of forging steps in an operation sequence is a sub-plurality of the plurality of operation steps.

In the preferred embodiments, the open-die forging system comprises a plurality of actuators, the plurality of actuators comprising a forging press and a manipulator. Each forging step comprises executing at least one pressing action of the press to change the shape of the workpiece. By way of example, the pressing action can be an elongation of a longitudinal section of the workpiece by stretch-drawing the longitudinal section down to a predetermined size or punching to form a step-shaped recess at a longitudinal position along the workpiece. Generally speaking, the combined action of the forging press and of the manipulator according to the shape of dies allows generating pieces of different shapes.

According to the present disclosure, it is provided an automatically controlled method for forging a blank to produce a longitudinal portion of a final piece having a final shape defined by final dimensions, the method using an open-die forging system comprising a plurality of actuators comprising a forging press and a manipulator, wherein the press comprises a die, the method comprising:
(a) providing an artificial intelligence module (AIM) logically connected to the plurality of actuators and configured to receive and transmit control signals to the actuators, wherein AIM is configured to generate adaptive modeling by means of artificial intelligence computational algorithms using learning rules that lead to a final shape of the final piece;
(b) acquiring, by the AIM, reference input data comprising piece dimensional data describing the final piece having a final shape defined by final dimensions and die dimensional data describing the geometry and dimensions of the die;
(c) defining, by the AIM, a forging process as a plurality of operation sequences comprising a first operation sequence to obtain a first longitudinal portion of the final piece, the first operation sequence comprising a plurality of operation steps, wherein the plurality of operation steps comprises a plurality of forging steps comprising a first forging step modifying the shape of the blank and a last forging step, each forging step comprising at least one press action to modify the shape of the workpiece being forged;
(d) acquiring, by the AIM, blank dimensional data describing the blank having a starting shape with starting dimensions;
(e) initializing, by using the AIM, the first operation sequence and generating a first intermediate execution model for a first forging step, wherein generation of the first intermediate execution model comprises using the adaptive computational algorithms to adaptively process the reference input data and the blank dimensional data to produce a 3D model defining a first intermediate shape of the workpiece to be forging by the first forging step and to calculate first output data for obtaining the first intermediate shape;
(f) executing, by using the AIM, the first intermediate execution model by actuating at least the press to perform the first forging step;
(g) detecting the actual dimensions of the workpiece at the end of the first forging step by using a plurality of radiation detectors producing output electrical signals, generating a dimensional map of the workpiece based on the output electrical signals of the plurality of detectors and transmitting the workpiece dimensional map to the AIM;
(h) generating, by using the AIM, a second intermediate execution model for a second forging step, wherein generation of the second intermediate execution model comprises using the adaptive computational algorithms to adaptively process the workpiece dimensional map detected at the end of the first forging step and the reference input data to produce a 3D model defining a second intermediate shape of the workpiece to be forged by the second forging step and to calculate intermediate output data for obtaining the second intermediate shape;
(i) executing, by using the AIM, the second intermediate execution model by actuating at least the press to perform the second forging step, and
(j) iteratively repeating steps (g) to (i) to sequentially execute the remaining operation steps of the first operation sequence to the last forging step so as to produce the first longitudinal portion of the final piece.

Preferably, after step (i) and before step (j), the method comprises:
(k) if necessary, commanding, by the AIM, a change of the cavity of the die for the subsequent forging steps. This action can be performed when the shape of the cavity in use does not allow further reductions in diameter of the workpiece, or when the workpiece must assume a particular shape, that can be realized only by a cavity with a particular conformation.

In some preferred embodiments, after step (i), or (k) when present, and before step (j), the method comprises:
commanding a rotation of the workpiece about its longitudinal axis in order to forge a different angular portion of the workpiece, for example the portion that was held by the grippers of the manipulator in the previous forging step.

Preferably, the method is a method for forging a blank to produce a final piece and the plurality of operation sequences comprises at least a second operation sequence to obtain a second longitudinal portion of the final piece, the second operation sequence comprising a plurality of operation steps, wherein the plurality of operation steps comprises a plurality of forging steps comprising an initial forging step modifying the shape of the workpiece produced by the first operation sequence and a last forging step, the method further comprising repeating steps (e) to (j) to produce the second longitudinal portion of the final piece so as to complete the formation of the final piece.

Preferably, the output data for each forging step comprise the pressure to be applied by the press on the workpiece. The forging pressure mainly depends on the volume and, preferably, on the temperature of the material to be forging in a forging step to obtain the final shape of the piece and by taking into account the actual shape of the workpiece after the previous operation step.

The press includes an upper die and a lower die. Preferably, the first intermediate execution model produces as output a first distance reduction (ΔD_{z})₁ of the distance D_{z} between the upper die and lower die, and actuating the press during execution of the first execution model is by controlling the distance D_{z} so as to reduce it by the first distance reduction to obtain a distance (D_{z})₁.

Preferably, the second intermediate execution model produces as intermediate output a second distance reduction (ΔD_{z})₂ of the distance (D_{z})₁, and actuating the press during execution of the second intermediate execution model is to reduce the distance D_{z} by the second distance reduction.

In some embodiments, steps (f) and (i) are carried out by actuating the press and the manipulator. Preferably, the first intermediate execution model defines a first position of the manipulator along the main longitudinal direction of the workpiece with respect to the dies for the first forging step. Preferably, the second intermediate execution model defines a second position of the manipulator along the main longitudinal direction of the workpiece with respect to the dies for the second forging step. According to these embodiments, the execution model calculates as output data for each forging step the position of the manipulator with respect to the dies and the distance reduction of the distance between the dies, which is related to the height reduction of the dimensions of the workpiece.

In some preferred embodiments, the AIM provides as output data of the intermediate execution model, the angle of rotation around the longitudinal axis of the workpiece during the forging step.

The intermediate execution model generated for a forging step produces a 3D dimensional model of the predicted shape of the workpiece after the forging step and calculates output data. The intermediate execution model is then executed, through generation of control signals, which command the actuations of the actuators in accordance with preset forging and spatial parameters corresponding to the output data.

In some embodiments, the AIM provides as output data a maximum time allowed during the forging step to be executed.

In some preferred embodiments, the AIM generates at the end of each forging step an intermediate execution model defining a 3D model describing the intermediate shape of the workpiece to be obtained after the subsequent forging step, while defining the volume of material to be forging, the pressure applied to the material and the height reduction of the material.

Preferably, the piece dimensional data describing the finished piece is a 3D mathematical model, such as the description of a three-dimensional drawing of the piece.

In some preferred embodiments, the step of detecting the workpiece during forging processing further comprises generating a thermal map of the workpiece by processing the output signals received by the radiation detectors, which allows, in certain cases, further control of the forging process.

According to some embodiments of the invention, the sequence of operation steps is a dynamic series of operation steps, which are calculated by the AIM by taking into account the actual characteristics of the workpiece measured during forging in order to improve the execution time.

Preferably, the plurality of detectors is an array of electromagnetic infrared radiation detectors connected to a visual processing module, which is configured to generate the dimensional map by processing the signals received from the detectors and is logically connected to the AIM which receives the generated dimensional map. This allows the artificial intelligence module to control the results of each step of the operative sequence.

### Brief description of the drawings

Features and advantages of the present invention will appear more clearly from the following description of some exemplary embodiments, with reference to the annexed drawings, in which:
- Figure 1 shows a side view of a forging system suitable to carry out the method in accordance with the invention;
- Figure 2 is a schematic perspective view of a section of a workpiece to be forging, positioned between the dies of a press;
- Figure 3 is a schematic partial top view of the system of Figure 1, showing the visual cones of a plurality of radiation detectors;
- Figure 4 shows three different visual detections of a workpiece to be forging;
- Figure 5 shows a block diagram of the forging control system, according to an embodiment of the invention.
- Figures 6a to 6c schematically represent an exemplary plurality of forging steps comprised in an operation sequence.
- Figure 7 is a top view of a train axle as an exemplary final piece produced by a method consistent with the present disclosure.
- Figures 8a-8h show schematically a forging process defined as a series of subsequent operation sequences, according to an embodiment of the present invention.
- Figure 9a is a cross-sectional view of a three-cavity die, whereas Figure 9b is a cross-sectional view in a plane perpendicular to that of Fig. 9a.

### Detailed description

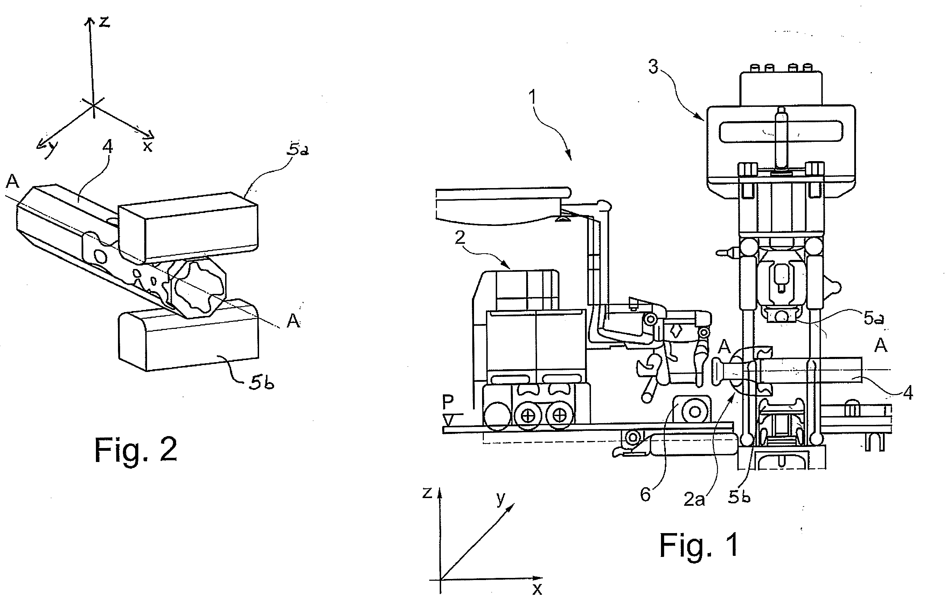

Figure 1 shows an incremental open-die forging system 1, which comprises at least two main actuators 2 and 3 for forging a blank 4 or workpiece to obtain a final piece having a final shape defined by final dimensions. The embodiments described here below refer to press forging in which the workpiece, typically metallic, is worked at high temperatures to allow deformation and material displacement of the metallic body.

In the present embodiments, the main actuators are a manipulator 2, for example a conventional robot arm or a multiple-axis motorized grip hand, and a forging press 3.

Reference will be made in the following to a Cartesian reference system with axes X, Y and Z, with a plane X-Z being referred to as a main or vertical forging plane, and a plane X-Y being referred to as a secondary or horizontal forging plane.

Although only schematically represented as flat dies, the upper and lower dies may be implemented as half-shells having features, such as concavities. The press, for example an hydraulic press, moves up and down along a Z axis, perpendicular to the horizontal axis X of main longitudinal extension of the blank, when placed in position for the forging process. The press 3 comprises an upper die 5a fixed to the moving beam of the press and a (often fixed) lower die 5b. By applying a pressure, the press 3 deforms the hot blank 4 by dies 5a and 5b. Figure 2 is a schematic perspective view of a section of a blank 4 (or workpiece) to be forged, positioned between the upper die 5a and the lower die 5b. An application of a pressure on the workpiece can be defined by a pressure value and a height reduction of the workpiece.

As it is generally known, the press in an open-die system does not completely restrain the worked blank by tightly clamping it to impart a deformation and/or a material displacement. In some embodiments, the forging system employs multi-cavity dies, arranged along a same plane, XY.

The manipulator 2 comprises a moving arm 2a having a gripper whose jaws are designed to grip the blank 4, which has mainly, but without limitation, a substantially cylindrical elongated shape along longitudinal axis A-A.

The axis A-A lies on the horizontal plane X-Y which is substantially parallel to support plane P of the manipulator 2.

The manipulator can grasp and move the blank 4 (or workpiece) in any direction X, Y and Z, also under the press 3. In particular, the manipulator 2 is actuated to impart a translational movement of the metal parts to be worked, back and forth across the press, along the X-axis, and a rotational movement, such as spinning the workpiece during compression or rotating the workpiece to press different angular sections of the metal part to be forging. The manipulator and the press are controlled by respective first control signals and second control signals, to operate in an automatic and synchronized mode. In the usual ways, the first and second control signals are received and controlled by a control station (not shown in the drawings) of the forging system.

The forging system 1 may also include secondary actuators (not shown in the figures), which assist the main actuators and do not directly interfere with the forging process. Secondary actuators are controlled by further control signals received and controlled by the control station. The secondary actuators include: loading systems, unloading systems, motorized placement devices, and automation systems for changing cavity in multi-cavity dies.

In an initial centering step, the blank 4 is engaged by the manipulator 2, translated in the X axis, parallel to the axis A-A, and possibly rotated and/or inclined to form angles α between the axis A-A and the horizontal plane X-Y and angles β between the axis A-A and the vertical plane X-Z. The manipulator 2 is also configured to carry out various rotation steps, in which the blank 4 is usually rotated by 90°, with the horizontal plane X-Y exchanging each time with the vertical plane X-Z. Smaller rotation angles are allowed, for example during a finishing phase of the workpiece.

As secondary actuator, the forging system of Fig. 1 comprises a rotating support device 6 interposed between the manipulator 2 and the press 3, and has a support base for supporting the blank 4 before the latter is seized by the manipulator 2. The support device 6 has also the function to rotate the workpiece about its longitudinal axis so as to place in the die cavity the area that was in the grippers of the manipulator in a previous forging step.

The method of the present invention uses artificial intelligence to execute and control the forging process, preferably from loading a blank to completion of a final piece having final dimensions. To this end, an artificial intelligence module (AIM) is provided, which is logically connected to the plurality of actuators, and configured to receive and transmit control signals from the actuators, and in particular first and second control signals from the manipulator and the forging press, respectively. A forging process is stored in the AIM as a plurality of operation sequences, each operation sequence comprising a plurality of operations steps defining the actions to be executed for handling and/or working the workpiece to change at least partially its shape. For example, the AIM can be installed in the control station of the forging system.

The forging process comprises at least one operation sequence including a series of operation steps for processing the workpiece, which start from an operation step in which the blank 4 is initially centered and gripped by the manipulator 2, to an end operation step in which a final piece is released, when the required final dimensions are obtained. The number of the operation sequences in a forging process may depend on the complexity of the final object, for example on the number of the variations of the external diameter of an oblong piece to be produced. It is to be understood that the present invention encompasses a forging process defined by a single sequence of operation steps starting with loading and working a blank to completion of a final piece having final dimensions.

With operation step it is generally meant a step in which the blank or workpiece is handled and/or worked, for example a step for loading the blank and positioning it between the dies of the press, a step of advancing back and forth the workpiece across the press along the X direction to work different longitudinal sections of the workpiece, or a step for drawing down a longitudinal section of the workpiece to a predetermined size. With forging step it is meant a particular type of operation step, which comprises a forging action that transforms at least partially the shape of the workpiece. In the preferred embodiments, the forging action is a press action that at least partially modifies the shape and thus the dimensions of the blank or of the workpiece. Therefore, an operation sequence comprises a plurality of sequential operation steps comprising a plurality of forging steps. In most embodiments, the plurality of operation steps further comprises a plurality of steps that do not entail forging actions, such as workpiece load and unload or half rotation of the workpiece (in a forging process, a workpiece is often forged on half of its outer surface, rotated of 180°, retaken and worked on the other half). The forging steps in an operation sequence are to be understood as sequential one to another, although two next subsequent forging steps can be separated by an operation step that does not comprise a forging action.

As described more in detail in the following, the number and the action of subsequent forging steps within an operational sequence may be modified in real time by the AIM depending on the physical characteristics detected during a previous forging process, such as the temperature of the workpiece.

Each operation step of the series includes a set of actions, each action being executed through the control of the main and/or the secondary actuators.

The final piece typically has a shape with variable cross-section.

The method according to the present disclosure employs a forging control system comprising a plurality of radiation detectors, for example IR cameras, for detecting electromagnetic infrared radiation emitted from the workpiece during the forging process.

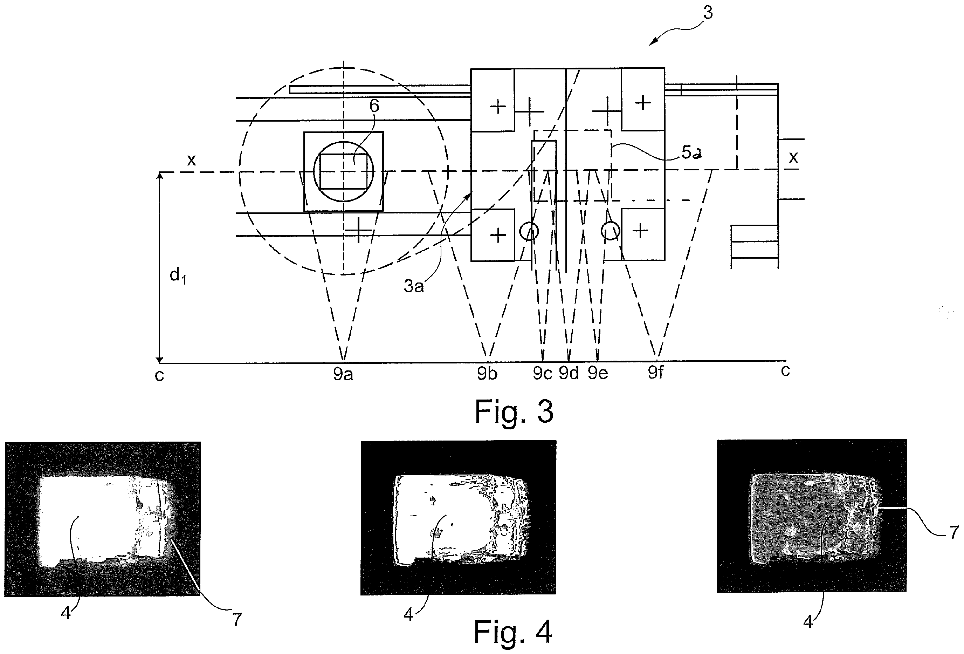

Figure 3 is a schematic top view of the press 3 and a plurality of detectors, which are arranged along a C-C direction substantially parallel to the X-X direction, in accordance with an embodiment of the invention. The open-die forging system comprises an array of electromagnetic infrared radiation detectors 9a-9f, preferably IR cameras, which are connected to a visual processing module (not shown in Fig. 3), VSM, which is configured to generate a dimensional map M1 and, in some embodiments, a thermal map M2 of the workpiece. The IR cameras are arranged to detect the actual dimensions of the blank (initial condition) and of workpiece at the end of each forging step. The output electrical signals of the IR cameras are received by the VSM, which is configured to generate a dimensional map of the blank/workpiece and to transmit the dimensional map to the AIM.

In some embodiments, the IR cameras 9a-9f are arranged in a mutually aligned relationship to detect the position of the workpiece at the beginning of an operation step and at the end of the same step. If the operation step is a forging step including at least one press action, the IR cameras detect the actual outer dimensions at the end of the forging step (i.e. actual intermediate dimensions), which are acquired by the VSM and processed to generate an intermediate dimensional map M1 of the piece being worked.

In the embodiment of Fig. 3, the method provides the use of six IR cameras 9a-9f, which are substantially aligned along a C-C direction, which is located at the side of the manipulator 2 and the press 3. The array of IR cameras 9a-9f allows detection of the blank 4 during the entire forging process: from the initial step in which the blank 4 is centered to a final release step. Considering a Cartesian reference system with axes X, Y, Z, as shown in Figure 1, in the method the six IR cameras 9a-9f are arranged to allow detection of the workpiece 4 in a vertical forging plane X-Z, which is substantially perpendicular to a plane P on which the manipulator 2 is supported. In some embodiments, a plurality of secondary IR cameras are provided, for real-time detection of the workpiece 4 in a plane X-Y which is substantially the horizontal forging plane.

The IR cameras 9a-9f may be also arranged along multiple directions, and the distance d₁ from the axis X-X may be also changed for logistical reasons.

In a preferred arrangement, an array of IR cameras is provided along the C-C direction and comprises:
- a first IR camera 9a located at a motorized support device 6, which is designed to detect the blank 4 during the starting step of centering, the support device 6 being adapted to support the blank 4 during this step;
- a second IR camera 9b located proximate but external to the press 3, for detecting the starting step of centering at the entrance opening 3a of the press 3;
- a third IR camera 9c located proximate to the initial end of upper die 5a for measuring the diameter and position X of the workpiece that enters the die;
- a fourth IR camera 9d located at the center of the open die 5a-5b for measuring the amount of material in the die;
- a fifth IR camera 9e located proximate to the final end of the open die for measuring the diameter and position X of the workpiece that exits the die;
- a sixth IR camera 9f located proximate but external to the press 3, for detecting the dimensions of the part of excess material outside the die and for monitoring the release step of the finished workpiece in the final step resulting in the final piece.

Each IR camera 9a-9f of the array is placed at a distance from the previous and next cameras, to detect the entire work area. Particularly, the second IR camera 9b, the third IR camera 9c, the fourth IR camera 9d and the fifth IR camera 9d are in such positions that the field of view of each of them partially overlaps the field of view of the adjacent IR cameras 9a-9f in the X-X direction, as shown in Figure 3 with dashed lines.

The number and position of the IR cameras 9a-9f, as well as the position of the direction C-C and the level thereof relative to the support plane P may change according to the type of system and shall be intended without limitation to the present invention.

In an embodiment, the radiation detectors are visible-light cameras.

The visual processing module VSM is configured to process the intensities of the output electrical signals received from the IR cameras 9a-9f and to define the dimensional map M1 and possibly a thermal map M2 of the workpiece.

The AIM is a software module employing a plurality of artificial intelligence computational algorithms, which can use different computational techniques, such as genetic algorithms, fuzzy logics, statistical logics, and neural networks, which in general allow time-dependent values to be defined according to self-training. As reference input data, the AIM stores the dimensions of the final piece, the dimensions of the dies and, preferably, the maximum pressure that can be exerted by the press. The AIM is configured to generate an adaptive modeling based on on the reference input data and on the dimensional information detected after each forging step. Generation of an adaptive modeling is carried out by using artificial intelligence (AI) adaptive algorithms comprising learning rules that lead to the final result, i.e. the final shape of a final piece. The AIM is configured to execute the generated adaptive modeling by actuating the actuators according to the modeling.

After loading the blank in position for the execution of the first operation sequence between the press dies, the AIM, on the basis of the stored final shape of a final piece, starts the execution of a first sequence of operations, having as input parameters the actual initial shape of the blank, the final shape of the final piece, and the geometry and dimensions of the dies. The operation sequence comprises a plurality of subsequent forging steps, comprising a first and a last forging step, the first forging step imparting a shape modification to the blank and the last forging step producing the final piece having the final shape, each forging step comprising at least one press action to modify the shape of the workpiece. As discussed more in detail in the following, other input parameters may be provided to the AIM, such as the temperature of the blank. The AIM generates a first intermediate execution model describing a first 3D intermediate shape of the workpiece at the end of the first forging step. Subsequently, the AIM executes the execution model by generating control signals that command the forging press and the manipulator to work the blank to carry out the first forging step.

At the end of the first forging step, the method proceeds by detecting the actual dimensions of the workpiece by means of the plurality of IR detectors, which produce as output electric signals which are acquired by the VSM to generate a first actual dimensional map M1 of the workpiece after the first forging step. The AIM acquires the first actual dimensional map M1 and, preferably, the height reduction of the workpiece after the first forging step, which can be represented by the distance along the Z-axis between the upper and lower dies. Preferably, the AIM acquires also the value of pressure used during the first forging step to calculate the inner temperature of the workpiece and/or the surface temperature of the workpiece at the end of the first forging step. IR cameras, pressure sensor, deformation time, and/or the deformation shape can be used from the AIM to estimate the inner temperature of the workpiece for optimizing the process. In some embodiments, temperature sensors can be used to measure the outer temperature of the workpiece. In some embodiments, the AIM acquires the total time lapsed to execute the first forging step and the pressing time during the press action within the forging step.

The AIM uses adaptive algorithms having learning rules that lead, through subsequent steps, to the final result, namely the 3D mathematical model (e.g. description of a three-dimensional drawing) describing a final shape of a final piece. By using these computational algorithms, the AIM adaptively processes the dimensional map describing the actual dimensions of the workpiece after the first forging step and the reference input data and generates a second intermediate execution model defining a 3D model of a second intermediate shape for the next subsequent forging step, i.e. the second forging step. The second intermediate execution model provides as output data a height reduction of the workpiece to be applied by the press in the second forging step, the linear translational movements of the workpiece along the X- axis and the angle of rotation to be executed during the second forging step around the longitudinal axis of the workpiece.

The AIM then executes the second forging step and, possibly, operation steps not involving forging, by imparting an ordered set of controlled actions according to second intermediate execution model.

At the end of the second forging step, the method repeats the acquisitions and the processing performed at the end of the first forging step, namely: detecting the actual dimensions of the workpiece by means of the plurality of IR detectors, which are acquired by the VSM to generate an actual dimensional map M1 of the workpiece after the second forging step, acquisition by the AIM of the actual dimensional map M1 and, preferably, information on the height reduction of the workpiece after the second forging step, and possibly other input parameters listed with reference to the first forging step, generation of an intermediate execution model for the next subsequent forging step, i.e. the third forging step, and execution of the third forging step as an ordered set of actions according to the output data resulting from the intermediate execution model.

The method repeats iteratively the above method steps for each forging step of the operation sequence and in general for each operation step of the sequence, until it arrives at the final shape defined for this sequence, generally at the final shape of a longitudinal section of the workpiece. When the shape of the longitudinal section of the workpiece has the desired final form, the system switches to the next sequence.

Preferably, a position sensor is mounted on the press to detect the actual vertical position along the Z-axis of the press. This can be useful in case the workpiece is partially hidden by the die, e.g. it is placed partially beneath the die, and then it is not completely visible by IR detectors. In this case, signals from the press position sensor are acquired and processed by the VSM to complete the dimensional map M1 of the workpiece.

The AIM learns that the final shape has been reached by detecting the actual dimensions of the workpiece after the last forging step of the sequence by means of the plurality of IR detectors, and, preferably, by real press position Z that generate an actual dimensional map M1 is compared with the stored final shape (contained in the reference input data) for this sequence. If the actual shape and the stored final shape for this operation sequence are within the tolerances, the system switches to the next operation sequence.

The plurality of operation steps of a operation sequence is dynamic, namely the adaptive modeling of the AIM uses a dynamic programming of first sequence of operation steps, and, in accordance with the reference input data and the dimensional map of the workpiece after a forging step of the sequence, the AIM may decide to change the order and/or the number of operation steps of the sequence. For example, the adaptive artificial intelligence may generate an intermediate execution model executing a forging step between two initially-set subsequent forging steps, which entails only movements of the workpiece to compensate for some misalignment incurred in the first of the two forging steps.

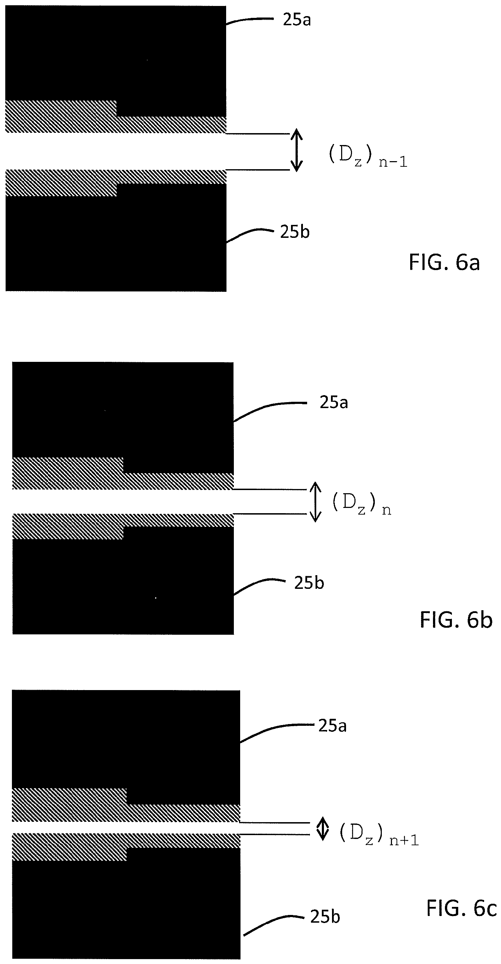

In some preferred embodiments, the press action is controlled by controlling the distance D_{z} between the upper die and lower die along the Z axis. The distance D_{z} is related to the outer diameter of the workpiece. Typically, the outer diameter of the workpiece between the dies is equal to the sum of D_{z} and the die diameter, although mathematical relationship may depend on the die geometry. Figures 6a to 6c show an example of three subsequent forging steps for incremental reduction of the outer diameter of the workpiece. In the present example, the sequence operation is cogging, in which the thickness of a longitudinal section of a workpiece is incrementally reduced by successive forging steps, each consisting of a single press action. Schematic representation of the upper die 25a and the lower die 25b in the XZ plane is shown, whereas the workpiece between the dies is not indicated in the figures. Figure 6a represents the result of a forging step (n-1) of an operation sequence, which has brought the distance to a value (D_{z})ₙ₋₁. At the end of step (n-1), following detection by means of IR detectors, the VSM generates a dimensional map of the workpiece, the AIM acquires as input parameters this dimensional map and generates an intermediate execution model for the step n, which provides as output a value of distance reduction, (ΔD_{z})ₙ=(D_{z})ₙ₋₁-(D_{z})ₙ, to obtain an outer diameter corresponding to (D_{z})ₙ. The AIM then executes the intermediate execution model for the step n, which comprises actuating the press to reduce the distance between the dies, with respect to the previous step, of a value (ΔD_{z})ₙ (Fig. 6b). Figure 6c shows the result of a step (n+1), in which a press action, executed by the AIM following generation of an intermediate execution model for the step (n+1), has further reduced the distance between the dies, and thus the outer diameter of the workpiece, of (ΔD_{z})ₙ₊₁=(D_{z})ₙ-(D_{z})ₙ₊₁.

Generally, the intermediate shape at the end of a forging step produces a longitudinal section of the workpiece having some outer diameters smaller than those of the same longitudinal section at the end of a previous forging step. Simultaneously, the workpiece increases its length because the material tends to be distributed longitudinally and may generate an out-of-roundness about its axis of rotation. This out-of-roundness is taken into account by AIM for the next forging step, as described in the following.

By way of example, following a first press action, a longitudinal portion of the workpiece having round cross-section shows an elliptical cross-section having the smaller axis along the Z-axis (press direction). As a consequence, a volume of material moves in the directions X and Y thereby causing an uneven distribution of extra-material on the workpiece. When, at the next operational step, the workpiece is rotated by 90°, the larger axis of the workpiece cross-section is arranged vertically, along the Z-axis, whereas the pressed side is positioned horizontally. Therefore, the object to be pressed in a subsequent second press action could be larger along the Z-axis than the object pressed by the first press action.

The adaptive processing of the reference input data and of the actual dimensions of the workpiece for the generation of the execution model takes into account the distribution of the material caused by the press action of the preceding forging step and produces the "best" 3D model shape of the workpiece to be forging and the output data to obtain that shape, so as to obtain a re-distribution of the material that lead to the desired final shape of the object. In an iterative process, the estimated re-distribution of materials will be validated after the next forging step by acquisition of the actual dimensions of the workpiece.

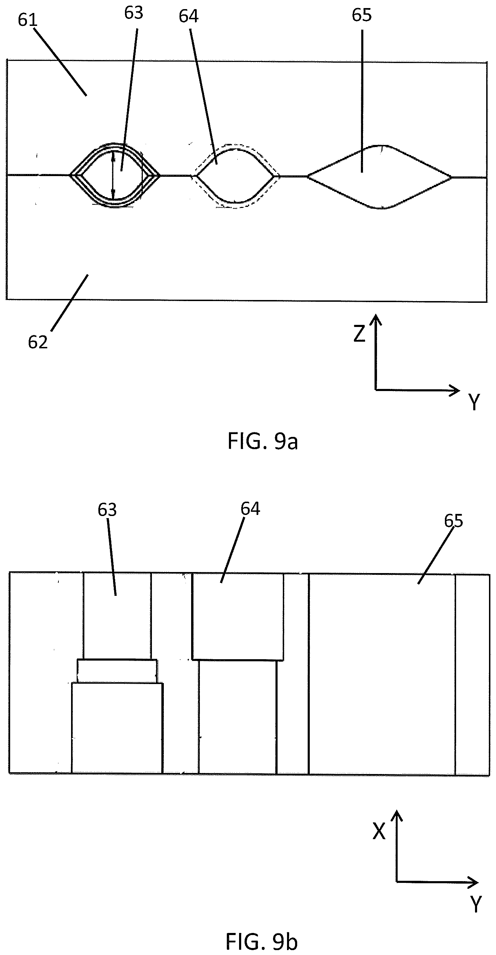

The worked piece may exhibit different outer diameters along its main longitudinal axis and therefore it is preferred that the intermediate execution models provide as output a position along the X axis in order to forge with a series of correct diameters the portion of the workpiece placed between the dies. To allow to create a workpiece with different diameters in the longitudinal axis X must move the manipulator 2 along the X axis in such a way that the workpiece is at the correct X position with respect to the dies, for example as shown in Fig. 9b.

The X position of the manipulator with respect to the dies depends on the deformation of the workpiece and is calculated by the AIM at each forging step.

The AIM generates at the end of each forging step a new intermediate execution models defining respective intermediate shapes of the workpiece while varying the volume of material to be forged, the pressure applied to the material and the height reduction of the material.

In some embodiments, the variation of the height reductions from an intermediate shape and the next one depends on a plurality of parameters, which are provided as input data to the AIM. Some of these parameters, for example the maximum pressure that can be applied depend on the characteristics of the press, whereas other parameters are related to the workpiece, such as the temperature and the hardness of the material and the actual deformation that the press has imparted onto the workpiece in the previous forging step.

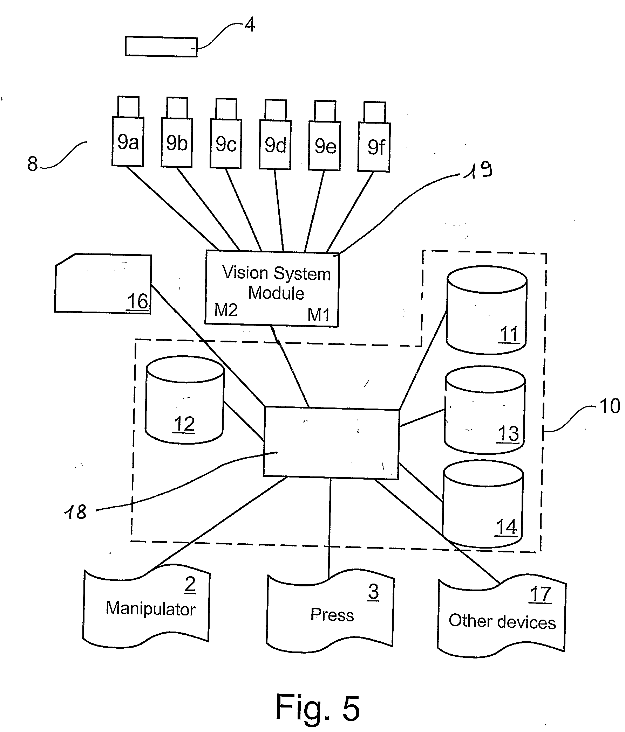

After a forging step, the AIM receives from the Vision System Module 8 (Fig. 5) and possibly from other sensors 16 the information concerning the deformation status of the workpiece as a plurality of measurements of the IR cameras, the pressure applied during said deformation, the time lapsed during the forging step and the temperature of the workpiece.

The AIM analyses this information and generates some dynamic parameters that determine the creation of the next intermediate shape.

For example, if after a previous forging step the system detects a time to carry out the step too long to reach the height reduction preset for the step, the AIM will calculate an intermediate shape for the next forging step such that the diameter difference between the actual detected value of height reduction and the value of height reduction for the subsequent step is less than diameter difference between the actual detected value of height reduction for the previous step and the preset value of height reduction for the previous step. In this way, working times will be optimized.

As a further example, if after a previous forging step a portion of material has been measured by IR cameras to be poured out from the open die, in the opposite part respect to the manipulator, the AIM calculates a length portion along X of the workpiece in such a way that at the next press action also the poured-out material is forged, assuming that the final shape of the finished object requires that that portion of material is to be forging at that length portion. For this particular operating sequence, the AIM commands a series of positions X of the manipulator in such a way that the entire portion can be forged in the dies.

By way of a still further example, in case of the production of pieces having circular cross-sections, when the workpiece has dimensions close to those of the final piece, the AIM reduces the rotational angle and decreases the height reduction (diameter difference between the actual height reduction after the last step and the height reduction of the subsequent step) so as to obtain a final piece with improved homogeneity and less sharp angles. For example in the rough phases, the forging rotation angle is typically 90° and generates objects of non-circular section, the sections look like square with rounded corners, in the final phase the manipulator rotates typically of 30 ° in order to generate circular sections. In the rough phases it is preferred not to use small angles of rotation because the process would be too slow.

As another example on how the AIM can work adaptively on the actuators, it is assumed that the blank to be forged is colder than the previous blank (probably the heated blank waited out the oven too long). In this case, the AIM by using the adaptive algorithms decides to decrease the height reduction to avoid creating cracks. For example, the AIM imparts a command that a particularly hot workpiece should be reduced by 30 mm at the next forging step, whereas for a colder workpiece the AIM controls the press to reduce the piece of 25 mm at the next forging step. If during the forging sequence the temperature of the workpiece continually changes, the height reduction is recalculated each time by taking into account the actual temperature, which can be detected by temperature sensors or calculated as indicated in the foregoing.

In some embodiments, the AIM may change the ordered set of actions for the subsequent operation step, and possibly the chronological order of operation steps within an operation sequence of the forging control system.

Particularly, the plurality of subsequent operation steps is a dynamic series, i.e. a chronological list of operation steps that is stored in the AIM and is iteratively controlled by the AIM at the end of each operation step. This will considerably shorten the processing times and reduce the probability of ending the forging process with final dimensions of the finished piece outside acceptable tolerances.

The artificial intelligence system further comprises operation sequence algorithms, to be used in simplified operation steps, e.g. the operation steps that do not require adaptive learning, such as rotation of the workpiece, grip of the workpiece, release of the workpiece, entrance and exit of the workpiece into the press.

A starting step of centering the blank 4 will be now described by way of illustration and without limitation.

Once the control unit AIM (Artificial Intelligence Module) receives a start signal, informing that the hot blank 4 is about to come out of the furnace, a preventive initial actuator monitoring step is carried out.

Using a preset operational sequential algorithm, the initial monitoring step checks that the actuators are located in a safety area and, if this is not the case, it generates precise and preset sequences of first control signals and second control signals to place the actuators in these safety areas.

The AIM uses a further operation sequential algorithm to generate corresponding control signals to lift and rotate the support device 6 such that a robot that extracts the blank 4 from the furnace can lay it on the support base.

With reference to Fig. 1, the support device 6 is rotated such that the blank 4 on the support base is placed in an axial and central position with respect to an entrance 3a of the press 3. The blank 4 is detected by the plurality of detectors 9a-9f and the visual processing module VSM generates a dimensional map M1 and possibly the thermal map M2 of the blank.

The artificial intelligence system receives the dimensional map M1 and estimates the actual dimensions of the blank 4, irrespective of any recognized cold elements, such as surface flakes or else. This is because scales are cold elements and are identified as black spots in the thermal map M2, and hence recognized by the AIM.

Particularly, the AIM by processing the thermal map M2 allows recognition and identification of a surface flake from an end-of-section scale 7. Thus, while the surface flake has to be deemed as part of the blank 4, the end-of-section scale 7 generates a hollow area and shall be deemed as a portion to be removed.

Figure 4 schematically shows the end-of-section scale 7 as the darkest portion to the right of the blank 4.

Preferably, once the dimensions of the blank 4 have been estimated, the AIM defines the gripping level and generates the first control signals to control the arm of the manipulator 2 such that the blank 4 may be clamped at a gripping point. Preferably, the gripping point is required to correspond to the median point of the blank 4.

With reference to Fig. 5, the forging control system comprises an artificial intelligence module 10 configured to generate adaptive modeling which is connected to a visual processing module VSM 19. The AIM module 10 comprises a processing unit 18 configured to receive the dimensional map M1 and possibly the thermal map M2 and to estimate the dimensions of the workpiece in real time.

Adaptive modeling is generated by means of artificial intelligence computational algorithms 13 using learning rules that lead to a final shape of the final piece through a series of intermediate steps. The processing unit 18 retrieves the adaptive algorithms 13 for the generation of the execution models.

The AIM processing unit 18 is further configured to generate first control signals and second control signals respectively, adapted to move the manipulator 2 and the press 3, and possibly other devices 17, by means of operation sequence algorithms 14.

The plurality of operation sequences is stored in a module 12 connected to the AIM processing unit 18. Reference input data are stored in a second module 11, which is connected to the AIM unit 18.

The forging control system may further comprise additional sensors 16, for detecting ambient conditions during the forging process. Particularly, the additional sensors 16, e.g. pressure sensors, are aiding sensors that sense the pressure of the press 3 in view of optimizing the forging process. Other sensors can be thermal sensors for the detection of the temperature of the workpiece.

In one embodiment, each IR camera 9a-9f is configured to acquire up to 30 pictures per second, and the AIM module is configured to derive more than 100 dimensions of the workpiece for each picture from the dimensional map received from the VSM.

Advantageously, according to the present invention, the control method and the forging system allows to obtain the final object through full automation of the forging process, which may be also supervised by more unskilled operators, whose action may be only required under emergency conditions.

The throughput of the forging system of the present invention can be considerably increased, as the times for analysis and estimation of the blank dimensions are of the order of one tenth of a second, i.e. much shorter than the times required by manual control.

Furthermore, there will be a much smaller number of dimensional errors in the final product, as compared with manual or semi-automatic forging systems.

### Example

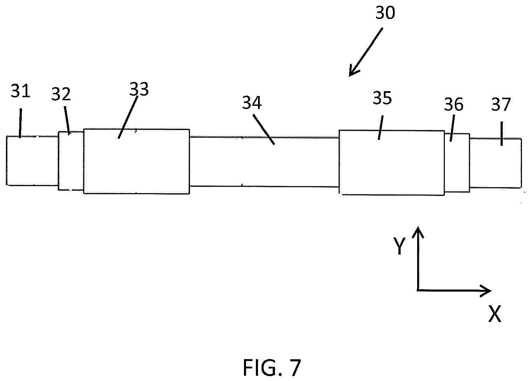

An example of a final object that can be manufactured by a forging method according to the present invention is a railway train axle. Figure 7 is a schematic top view of an axle 30 having, from left to right, six variations of outer diameter, which define seven longitudinal sections 31, 32, 33, 34, 35, 36. The axle has an axial symmetry along the Y-axis.

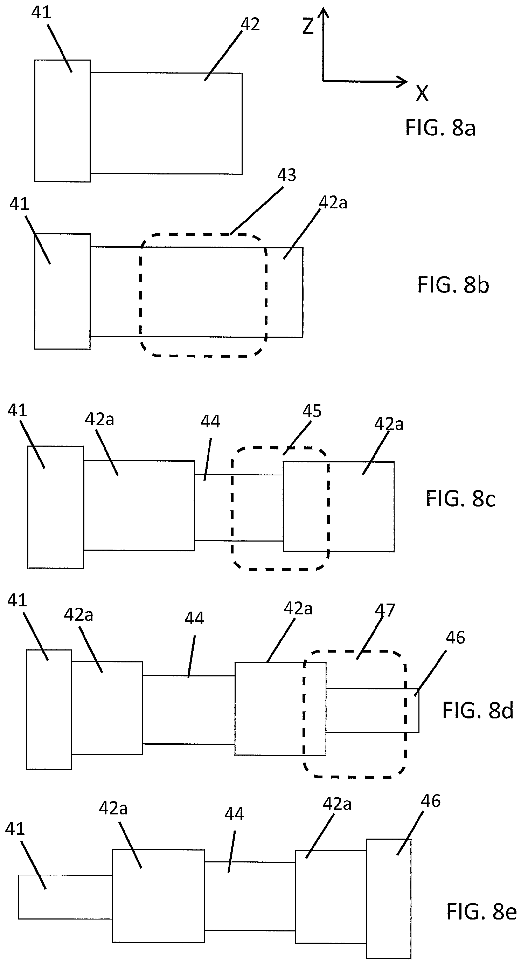

Figures 8a-8h show schematically a forging process defined as a series of subsequent operation sequences, according to an embodiment of the present invention, the process being suitable to produce a train axle, such that of Fig. 7. The forging process uses a forging system having a multi-cavity open die, which are schematically shown in Figs. 9a and 9b. Figure 9a is a cross-sectional view in the YZ plane of a three-cavity die, having an upper die 61 and a lower die 62, shown in a closed position, whereas Fig. 9b is a cross-sectional view in a plane perpendicular to that of Fig. 9a, taken along the middle plane of the cavities. The three-cavity die is configured such that they form first, second and third cavities 63, 64 and 65, forming concavities as negative mold for the shaping of the workpiece. Figure 9b is a cross-sectional view in the XY plane across the contacting surfaces of the upper and lower dies. First molding cavity 63 has three different widths across its length, while second molding cavity 64 has two different widths along its length. The third cavity 65 has a uniform width across its length.

Turning to the exemplary forging process for producing the train axle of Fig. 7, Fig. 8a depicts the result of a first operation press reduction step in which a cylindrical hot blank is reduced to the diameter as in 42 fig. 8a, whereas a portion 41 gripped by manipulator tongs remains at the diameter of the blank since it cannot be pressed. Figure 8b depicts the result of a first operation sequence that has uniformly decreased the initial outer diameter of the blank to form a cylindrical workpiece 42a having a uniform outer diameter smaller than that of the workpiece 42. The first operation sequence is performed by using third molding cavity 65 and is carried out by incrementally reducing the outer diameter (length reduction along the Z-axis of the compressive action) by means of a plurality of subsequent forging steps and movements of the manipulator along X-axis in order to move the workpiece forward and backward with respect the die 43, shown as a dashed line.

Figure 8c shows the result of a second operation sequence, subsequent to the first operation sequence, which has shaped a middle longitudinal section 44 of workpiece 42a having a smaller outer diameter that that of the adjacent longitudinal outer sections. The main forging steps include length incremental reduction of the distance between the upper and lower. The second operation sequence uses the second molding cavity 64 having a diameter discontinuity. The dashed line 45 indicates the die zone, namely the position of the molding cavity.

Figure 8d shows the end of a third operation sequenced carried out on the first molding cavity 63 to produce an end longitudinal section 46 (i.e. the spindle of the axle) having an outer diameter substantially smaller than that of the adjacent longitudinal section 42a. Dashed line 47 indicates the zone of the die.

First to third sequence operations are carried out on only a portion of the workpiece because the part 41 of the workpiece is held by the manipulator tongs and so this part cannot be forged with the press. To complete the shape of the longitudinal sections worked in the previous three operating sequences, it is necessary to rotate the workpiece and work the other part of the surface. At the end of the third operation sequence, the workpiece is rotated of 180° with respect to the centre of the workpiece in the XY plane during a fourth operation sequence, which may comprise unloading and retaken of the workpiece. To do this the AIM calculates the balance point of the workpiece and commands the manipulator to place it on the rotating support. The rotating support rotates 180° and the workpiece is taken by the manipulator.

The gripping point is calculated by the AIM using the dimensional map M1 generated by the VSM.

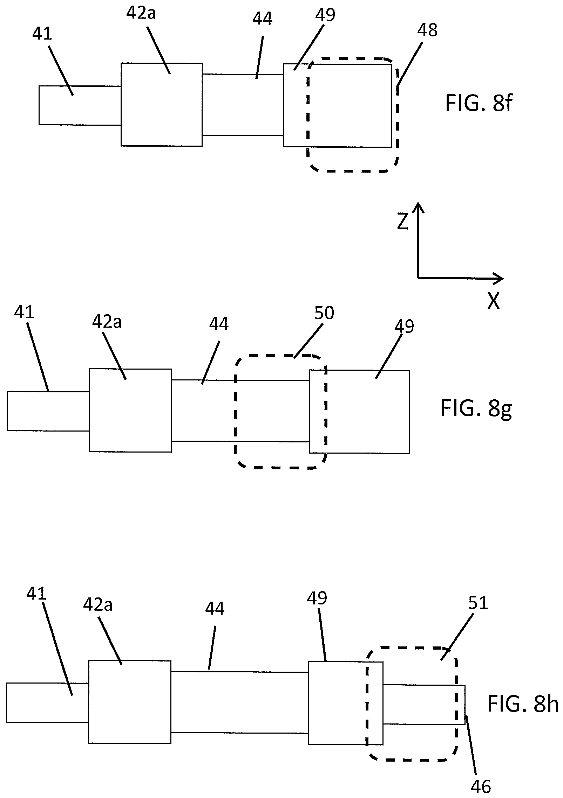

Figure 8e shows the workpiece of Fig. 8d after rotation of 180° with respect to the centre of the workpiece in the XY plane. Reference numeral 41 indicates the workpiece gripping zone of manipulator tongs seen after rotation. Figures 8f depicts the result of a fifth operation sequence, which decreased the outer diameter of the longitudinal section of workpiece 46 of fig. 8e to form a longitudinal section 49. The fifth operation sequence is performed by using third die cavity 65 and is carried out by incrementally reducing the outer diameter (length reduction along the Z-axis of the compressive action) by means of a plurality of subsequent forging steps. Dashed line 48 indicates the zone of the die.

Figure 8g shows the result of a sixth operation sequence, which has completed the shaping of the middle longitudinal section 44 by reducing the outer diameter of the middle section. The main forging steps include length incremental reduction of the distance between the upper and lower. The sixth operation sequence uses the second molding cavity 64 having a diameter discontinuity. The dashed line 50 indicates the die zone.

Figure 8h shows the end of a seventh operation sequence carried out by using the first molding cavity 63 to complete the end longitudinal section 46 (i.e. the spindle of the axle). Dashed line 51 indicates the zone of the first molding cavity 63.

## Claims

1. An automatically controlled method for forging a blank (4) to produce at least a first longitudinal portion of a final piece having a final shape defined by final dimensions, the method using an open-die forging system comprising a plurality of actuators comprising a forging press (3) and a manipulator (2), wherein the press comprises a die (5), the method comprising:
(a) providing an artificial intelligence module (AIM) (10) logically connected to the plurality of actuators and configured to receive and transmit control signals to the actuators, wherein the AIM (10) is configured to generate adaptive modeling by means of artificial intelligence computational algorithms using learning rules that lead to a final shape of the final piece;
(b) acquiring, by the AIM (10) , reference input data comprising piece dimensional data describing the final piece having a final shape defined by final dimensions and die dimensional data describing the geometry and dimensions of the die;
(c) defining, by the AIM (10) , a forging process as a plurality of operation sequences comprising a first operation sequence to obtain a first longitudinal portion of the final piece, the first operation sequence comprising a plurality of operation steps, wherein the plurality of operation steps comprises a plurality of forging steps comprising a first forging step modifying the shape of the blank and a last forging step, each forging step comprising at least one press action to modify the shape of the workpiece being forged;
(d) acquiring, by the AIM (10), blank dimensional data describing the blank having a starting shape with starting dimensions;
(e) initializing, by using the AIM (10), the first operation sequence and generating a first intermediate execution model for a first forging step, wherein generation of the first intermediate execution model comprises using the adaptive computational algorithms to adaptively process the reference input data and the blank dimensional data to produce a 3D model defining a first intermediate shape of the workpiece to be forged by the first forging step and to calculate first output data for obtaining the first intermediate shape;
(f) executing, by using the AIM (10) , the first intermediate execution model by actuating at least the press to perform the first forging step;
(g) detecting the actual dimensions of the workpiece at the end of the first forging step by using a plurality of radiation detectors (9) producing output electrical signals, generating a dimensional map of the workpiece based on the output electrical signals of the plurality of detectors and transmitting the workpiece dimensional map to the AIM;
(h) generating, by using the AIM (10) , a second intermediate execution model for a second forging step, wherein generation of the second intermediate execution model comprises using the adaptive computational algorithms to adaptively process the workpiece dimensional map detected at the end of the first forging step and the reference input data to produce a 3D model defining a second intermediate shape of the workpiece to be forged by the second forging step and to calculate intermediate output data for obtaining the second intermediate shape;
(i) executing, by using the AIM (10), the second intermediate execution model by actuating at least the press (3) to perform the second forging step, and
(j) iteratively repeating steps (g) to (i) to sequentially execute the remaining operation steps of the first operation sequence to the last forging step so as to produce the first longitudinal portion of the final piece.

2. The method of claim 1, wherein the press comprises a multiple-cavity die and executing the second intermediate execution model further comprises actuating the manipulator to change the cavity to be employed for a subsequent forging step.

3. The method of claim 1 or 2, wherein executing the second intermediate execution model further comprises actuating the manipulator to rotate the workpiece about its longitudinal axis by a predetermined angle of rotation, before executing a subsequent forging step.

4. The method of any of the preceding claims, wherein the method is for forging a blank (4) to produce a final piece and the plurality of operation sequences comprises at least a second operation sequence to obtain a second longitudinal portion of the final piece, the second operation sequence comprising a plurality of operation steps, wherein the plurality of operation steps comprises a plurality of forging steps comprising an initial forging step modifying the shape of the workpiece produced by the first operation sequence and a last forging step,
the method further comprising repeating steps (e) to (j) to produce the second longitudinal portion of the final piece so as to complete the formation of the final piece.

5. The method of any of the preceding claims, wherein the press (3) includes an upper die (5a) and a lower die (5b) and the first output data comprise a first distance reduction (ΔD_{z})₁ of a reference distance D_{z} between the upper die (5a) and lower die (5b), and actuating at least the press (3) to execute the first forging step of step (f) is carried out by controlling the distance between the upper and lower dies (5) so as to reduce it by the first distance reduction to obtain a distance (D_{z})₁.

6. The method of claim 5, wherein the intermediate output data comprise a second distance reduction (ΔD_{z})₂ of the distance (D_{z})₁, and actuating the press (3) of step (i) is carried out by controlling the distance between the upper and lower dies (5) so as to further reduce it by the second distance reduction.

7. The method of any of the preceding claims, wherein the first and the intermediate output data comprise a respective pressure value to be applied by the press during the respective forging steps.

8. The method of any of the preceding claims, wherein in steps (f) and (i) executing the intermediate execution model is carried out through generation of control signals which command the actuation of the at least the press (3) and possibly of the manipulator (2).

9. The method of any of the preceding claims, wherein the first output data and/or the intermediate output data comprise actuating the manipulator (2) to position the first longitudinal portion of the workpiece at a given position with respect to the die.

10. The method of any of the preceding claims, wherein step (d) of acquiring blank dimensional data comprises detecting actual dimensions of the blank by using the plurality of radiation detectors (9) producing output electrical signals, generating a blank dimensional map of the blank (4) from the output electrical signals, and transmitting the blank dimensional map to the AIM (10), wherein the blank dimensional data processed in step (e) by the adaptive computational algorithms is the blank dimensional map.

11. The method of any of the preceding claims, wherein the plurality of radiation detectors (9) is an array of infrared radiation detectors connected to a visual processing module, which is configured to generate the dimensional map by processing the output electric signals received from the detectors and is logically connected to the AIM (10) and configured to transmit the generated dimensional map to the AIM (10).

12. The method of any of the preceding claims, wherein the adaptive modeling of the AIM (10) uses a dynamic programming of first sequence of operation steps, and, in accordance with the reference input data and the dimensional map of the workpiece after a forging step of the sequence, the AIM (10) is configured to change the order and/or the number of operation steps in the sequence.

13. The method of claim 5, further comprising, before step (h), acquiring the actual distance between the upper die (5a) and the lower die (5b) after the first forging step and generation of a second intermediate execution model comprises using the adaptive computational algorithms to adaptively process the dimensional map of the workpiece detected at the end of the first forging step, the actual distance between the dies (5), and the reference input data to produce a 3D model defining the second intermediate shape and to calculate intermediate output data.

## Patentansprüche

1. Automatisch gesteuertes Verfahren zum Schmieden eines Rohlings (4) zur Herstellung von wenigstens einem ersten Längsabschnitt eines Abschlussstücks mit einer Abschlussform, die durch Abschlussabmessungen definiert ist, wobei das Verfahren ein Freiform-Schmiedesystem verwendet, umfassend eine Mehrzahl von Aktuatoren, umfassend eine Schmiedepresse (3) und einen Manipulator (2), wobei die Presse ein Gesenk (5) umfasst, wobei das Verfahren Folgendes umfasst:
(a) Bereitstellen eines Künstliche-Intelligenz-Moduls (AIM) (10), das logisch mit der Mehrzahl von Aktuatoren verbunden und ausgebildet ist, um Steuersignale zu empfangen und an die Aktuatoren zu senden, wobei das AIM (10) ausgebildet ist, um adaptive Modellierung mittels Künstliche-Intelligenz-Berechnungsalgorithmen unter Verwendung von Lernregeln zu generieren, die zu einer Abschlussform des Abschlussstücks führen;
(b) Erfassen - durch das AIM (10) - von Referenzeingangsdaten, umfassend die Abmessungsdaten des Stücks, die das Abschlussstück beschreiben, das eine Abschlussform aufweist, die durch Abschlussabmessungen definiert ist, und Gesenkabmessungsdaten, die die Geometrie und die Abmessungen des Gesenks beschreiben;
(c) Definieren - durch das AIM (10) - eines Schmiedeverfahrens als eine Mehrzahl von Arbeitsabfolgen, umfassend eine erste Arbeitsabfolge, um einen ersten Längsabschnitt des Abschlussstücks zu erhalten, wobei die erste Arbeitsabfolge eine Mehrzahl von Arbeitsschritten umfasst, wobei die Mehrzahl von Arbeitsschritten eine Mehrzahl von Schmiedeschritten umfasst, umfassend einen ersten Schmiedeschritt zum Ändern der Form des Rohlings und einen letzten Schmiedeschritt, wobei jeder Schmiedeschritt wenigstens eine Pressung zum Ändern der Form des zu schmiedenden Werkstücks umfasst;
(d) Erfassen - durch das AIM (10) - der Abmessungsdaten des Rohlings, die den Rohling beschreiben, der eine Ausgangsform mit Ausgangsabmessungen aufweist;
(e) Beginnen - durch das AIM (10) - der ersten Arbeitsabfolge und Generieren eines ersten Zwischenausführungsmodells für einen ersten Schmiedeschritt, wobei das Generieren des ersten Zwischenausführungsmodells das Verwenden von adaptiven Berechnungsalgorithmen umfasst, um die Referenzeingangsdaten und die Rohlingsabmessungsdaten adaptiv zu bearbeiten, um ein 3D-Modell herzustellen, das eine erste Zwischenform des im ersten Schmiedeschritt zu schmiedenden Werkstücks definiert, und um erste Ausgangsdaten zum Erhalten der ersten Zwischenform zu berechnen;
(f) Ausführen - durch Einsatz des AIM (10) - des ersten Zwischenausführungsmodells durch Betätigen von wenigstens der Presse zum Durchführen des ersten Schmiedeschrittes;
(g) Erfassen der Istabmessungen des Werkstücks am Ende des ersten Schmiedeschrittes durch Verwenden einer Mehrzahl von Strahlungsdetektoren (9), die ein elektrisches Ausgangssignal erzeugen, die eine Abmessungskarte des Werkstücks basierend auf den elektrischen Ausgangssignalen der Mehrzahl von Detektoren generieren und die der Abmessungskarte des Werkstücks an das AIM senden;
(h) Erzeugen - durch Einsatz des AIM (10) - eines zweiten Zwischenausführungsmodells für einen zweiten Schmiedeschritt, wobei das Erzeugen des zweiten Zwischenausführungsmodells das Verwenden der adaptiven Berechnungsalgorithmen zum adaptiven Verarbeiten der Abmessungskarte des Werkstücks, das am Ende des ersten Schmiedeschrittes erfasst wurde, und der Referenzeingangsdaten zum Herstellen eines 3D-Modells, das eine zweite Zwischenform des im zweiten Schmiedeschritt zu schmiedenden Werkstücks definiert, und zum Berechnen von Zwischenausgangsdaten zum Erhalten der zweiten Zwischenform umfasst;
(i) Ausführen - durch Einsatz des AIM (10) - des zweiten Zwischenausführungsmodells durch Betätigen von wenigstens der Presse (3) zum Durchführen des zweiten Schmiedeschrittes; und
(j) iteratives Wiederholen der Schritte (g) bis (i) zum aufeinanderfolgenden Ausführen der verbleibenden Arbeitsschritte der ersten Arbeitsabfolge bis zum letzten Schmiedeschritt, um den ersten Längsabschnitt des Abschlussstücks zu erhalten.

2. Verfahren nach Anspruch 1, wobei die Presse ein Mehrfach-Hohlraumgesenk umfasst, und wobei das Ausführen des zweiten Zwischenausführungsmodells ferner das Betätigen des Manipulators zum Ändern des Hohlraums umfasst, der für einen darauffolgenden Schmiedeschritt eingesetzt werden soll.

3. Verfahren nach Anspruch 1 oder 2, wobei das Ausführen des zweiten Zwischenausführungsmodells ferner das Betätigen des Manipulators umfasst, um das Werkstück in einem vorgegebenen Drehwinkel um seine Längsachse zu drehen, bevor ein darauffolgender Schmiedeschritt ausgeführt wird.

4. Verfahren nach einem der vorstehenden Ansprüche, wobei das Verfahren zum Schmieden eines Rohlings (4) dient, um ein Abschlussstück herzustellen und wobei die Mehrzahl der Arbeitsabfolgen wenigstens eine zweite Arbeitsabfolge umfasst, um einen zweiten Längsabschnitt des Abschlussstücks zu erhalten, wobei die zweite Arbeitsabfolge eine Mehrzahl von Arbeitsschritten umfasst, wobei die Mehrzahl von Arbeitsschritten eine Mehrzahl von Schmiedeschritten umfasst, die einen Anfangsschmiedeschritt zum Ändern der Form des in der ersten Arbeitsabfolge hergestellten Werkstücks und einen letzten Schmiedeschritt umfassen,
wobei das Verfahren ferner das Wiederholen der Schritte (e) bis (j) umfasst, um den zweiten Längsabschnitt des Abschlussstücks herzustellen, um die Bildung des Abschlussstücks zu vervollständigen.

5. Verfahren nach einem der vorstehenden Ansprüche, wobei die Presse (3) ein oberes Gesenk (5a) und ein unteres Gesenk (5b) aufweist und die ersten Ausgangsdaten eine erste Abstandsverringerung (ΔD_{z})₁ eines Referenzabstands D_{z} zwischen dem oberen Gesenk (5a) und dem unteren Gesenk (5b) umfassen, und wobei das Betätigen von wenigstens der Presse (3) zum Ausführen des ersten Schmiedeschrittes von Schritt (f) ausgeführt wird durch Steuern des Abstands zwischen dem oberen und dem unteren Gesenk (5), um ihn durch die erste Abstandsverringerung zu verringern, um einen Abstand (D_{z})₁ zu erhalten.

6. Verfahren nach Anspruch 5, wobei die Zwischenausgangsdaten eine zweite Abstandsverringerung (ΔD_{z})₂ des Abstands (D_{z})₁ umfassen und das Betätigen der Presse (3) in Schritt (i) ausgeführt wird durch Steuern des Abstands zwischen dem oberen und dem unteren Gesenk (5), um ihn durch die zweite Abstandsverringerung weiter zu verringern.

7. Verfahren nach einem der vorstehenden Ansprüche, wobei die ersten und die Zwischenausgangsdaten jeweils einen Druckwert umfassen, der durch die Presse während der jeweiligen Schmiedeschritte aufgebracht werden soll.

8. Verfahren nach einem der vorstehenden Ansprüche, wobei in den Schritten (f) und (i) das Ausführen des Zwischenausführungsmodells ausgeführt wird durch Generieren eines Steuersignals, das die Betätigung von wenigstens der Presse (3) und möglichst des Manipulators (2) steuert.

9. Verfahren nach einem der vorstehenden Ansprüche, wobei die ersten Ausgangsdaten und/oder die Zwischenausgangsdaten das Betätigen des Manipulators (2) umfassen, um den ersten Längsabschnitt des Werkstücks an einer bestimmten Position in Bezug auf das Gesenk zu positionieren.

10. Verfahren nach einem der vorstehenden Ansprüche, wobei der Schritt (d) des Erfassens der Abmessungsdaten des Rohlings das Erfassen der Istabmessungen des Rohlings durch Verwenden der Mehrzahl von Strahlungsdetektoren (9), die elektrische Ausgangssignale erzeugen, das Generieren einer Rohlingsabmessungskarte des Rohlings (4) aus den elektrischen Ausgangssignalen und das Senden der Rohlingsabmessungskarte an das AIM (10) umfasst, wobei die Rohlingsabmessungsdaten, die im Schritt (e) durch die adaptiven Berechnungsalgorithmen verarbeitet werden, die Rohlingsabmessungskarte ist.

11. Verfahren nach einem der vorstehenden Ansprüche, wobei die Mehrzahl der Strahlungsdetektoren (9) eine Anordnung von Infrarotstrahlungdetektoren ist, die mit einem visuellen Verarbeitungsmodul verbunden sind, welches ausgebildet ist, um die Abmessungskarte durch Verarbeiten der elektrischen Ausgangssignale zu generieren, die von den Detektoren empfangen werden, und logisch mit dem AIM (10) verbunden und ausgebildet ist, um die generierte Abmessungskarte an das AIM (10) zu senden.

12. Verfahren nach einem der vorstehenden Ansprüche, wobei das adaptive Modellieren des AIM (10) eine dynamische Programmierung einer ersten Abfolge von Arbeitsschritten verwendet und das AIM (10) entsprechend den Referenzeingangsdaten und der Abmessungskarte des Werkstücks nach einem Schmiedeschritt der Abfolge ausgebildet ist, um die Reihenfolge und/oder die Anzahl von Arbeitsschritten in der Abfolge zu ändern.

13. Verfahren nach Anspruch 5, ferner umfassend - vor dem Schritt (h) - das Erfassen des Istabstands zwischen dem oberen Gesenk (5a) und dem unteren Gesenk (5b) nach dem ersten Schmiedeschritt und wobei das Generieren eines zweiten Zwischenausführungsmodells das Verwenden von adaptiven Berechnungsalgorithmen umfasst, um die Abmessungskarte des Werkstücks, das am Ende des ersten Schmiedeschrittes erfasst wird, den Istabstand zwischen den Gesenken (5) und die Referenzeingangsdaten zur Herstellung eines 3D-Modells, das die zweite Zwischenform definiert, adaptiv zu verarbeiten und die Zwischenausgangsdaten zu berechnen.

## Revendications

1. Procédé contrôlé automatiquement pour forger une ébauche (4) pour produire au moins une première portion longitudinale d'une pièce finale ayant un profil final défini par des dimensions finales, le procédé utilisant un système de forgeage en matrice ouverte comprenant une pluralité d'actionneurs comprenant une presse à forger (3) et un manipulateur (2), dans lequel la presse comprend une matrice (5), le procédé comprenant :
(a) la fourniture d'un module d'intelligence artificielle (AIM) (10) connecté de manière logique à la pluralité d'actionneurs et configuré pour recevoir et transmettre des signaux de commande aux actionneurs, dans lequel l'AIM (10) est configuré pour générer une modélisation adaptative au moyen d'algorithmes de calculs d'intelligence artificielle utilisant des règles d'apprentissage qui conduisent à un profil final de la pièce finale ;
(b) l'acquisition, par l'AIM (10), des données d'entrée de référence comprenant des données dimensionnelles de pièce décrivant la pièce finale ayant un profil final défini par dimensions finales et des données dimensionnelles de matrice décrivant la géométrie et les dimensions de la matrice ;
(c) la définition, par l'AIM (10), d'un processus de forgeage comme une pluralité de séquences de fonctionnements comprenant une première séquence de fonctionnement pour obtenir une première portion longitudinale de la pièce finale, la première séquence de fonctionnement comprenant une pluralité d'étapes de fonctionnement, dans lequel la pluralité d'étapes de fonctionnement comprend une pluralité d'étapes de forgeage comprenant une première étape de forgeage modifiant le profil de l'ébauche et une dernière étape de forgeage, chaque étape de forgeage comprenant au moins une action de pressage pour modifier le profil de la pièce à forger ;
(d) l'acquisition, par l'AIM (10), de données dimensionnelles d'ébauche décrivant l'ébauche ayant un profil de départ et de dimensions de départ ;
(e) l'initialisation, en utilisant l'AIM (10), de la première séquence de fonctionnement et la génération d'un premier modèle d'exécution intermédiaire pour une première étape de forgeage, dans lequel la génération du premier modèle d'exécution intermédiaire comprend l'utilisation des algorithmes de calcul adaptatifs pour traiter de manière adaptative les données d'entrée de référence et les données dimensionnelles d'ébauche pour produire un modèle 3D définissant un premier profil intermédiaire de la pièce à forger par la première étape de forgeage et pour calculer des premières données de sortie pour l'obtention du premier profil intermédiaire ;
(f) l'exécution, en utilisant l'AIM (10), du premier modèle d'exécution intermédiaire en actionnant au moins la presse pour effectuer la première étape de forgeage ;
(g) la détection des dimensions effectives de la pièce à la fin de la première étape de forgeage en utilisant une pluralité de détecteurs de rayonnement (9) produisant des signaux électriques de sortie, générant une carte dimensionnelle de la pièce sur la base des signaux électriques de sortie de la pluralité de détecteurs et transmettant la carte dimensionnelle de pièce à l'AIM ;
(h) la génération, en utilisant l'AIM (10), d'un deuxième modèle d'exécution intermédiaire pour une deuxième étape de forgeage, dans lequel la génération du deuxième modèle d'exécution intermédiaire comprend l'utilisation des algorithmes de calcul adaptatifs pour traiter de manière adaptative la carte dimensionnelle de la pièce détectée à la fin de la première étape de forgeage et les données d'entrée de référence pour produire un modèle 3D définissant un deuxième profil intermédiaire de la pièce à forger par la deuxième étape de forgeage et pour calculer des données de sortie intermédiaires pour l'obtention du deuxième profil intermédiaire ;
(i) l'exécution, en utilisant l'AIM (10), du deuxième modèle d'exécution intermédiaire en actionnant au moins la presse (3) pour effectuer la deuxième étape de forgeage, et
(j) la répétition itérative des étapes (g) à (i) pour exécuter de manière séquentielle les étapes de fonctionnement restantes de la première séquence de fonctionnement à la dernière étape de forgeage de manière à produire la première portion longitudinale de la pièce finale.

2. Procédé selon la revendication 1, dans lequel la presse comprend une matrice à cavités multiples et l'exécution du deuxième modèle d'exécution intermédiaire comprend en outre l'actionnement du manipulateur pour changer la cavité à employer pour une étape de forgeage suivante.

3. Procédé selon la revendication 1 ou 2, dans lequel l'exécution du deuxième modèle d'exécution intermédiaire comprend en outre l'actionnement du manipulateur pour faire tourner la pièce autour de son axe longitudinal d'un angle de rotation prédéterminé, avant l'exécution d'une étape de forgeage suivante.

4. Procédé selon l'une quelconque des revendications précédentes, dans lequel le procédé est adapté pour forger un ébauche (4) pour produire une pièce finale et la pluralité de séquences de fonctionnement comprend au moins une deuxième séquence de fonctionnement pour obtenir une deuxième portion longitudinale de la pièce finale, la deuxième séquence de fonctionnement comprenant une pluralité d'étapes de fonctionnement, dans lequel la pluralité d'étapes de fonctionnement comprend une pluralité d'étapes de forgeage comprenant une étape de forgeage initiale modifiant le profil de la pièce produite par la première séquence de fonctionnement et une dernière étape de forgeage, le procédé comprenant en outre la répétition des étapes (e) à (j) pour produire la deuxième portion longitudinale de la pièce finale de manière à achever la formation de la pièce finale.

5. Procédé selon l'une quelconque des revendications précédentes, dans lequel la presse (3) comprend une matrice supérieure (5a) et une matrice inférieure (5b) et les premières données de sortie comprennent une première réduction de distance (ΔD_{z})₁ d'une distance de référence D_{z} entre la matrice supérieure (5a) et la matrice inférieure (5b), et l'actionnement au moins de la presse (3) pour exécuter la première étape de forgeage de l'étape (f) est exécuté en commandant la distance entre les matrices supérieure et inférieure (5) de manière à la réduire de la première réduction de distance pour obtenir une distance (D_{z})₁.

6. Procédé selon la revendication 5, dans lequel les données de sortie intermédiaires comprennent une deuxième réduction de distance (ΔD_{z})₂ de la distance (D_{z})₁, et l'actionnement de la presse (3) de l'étape (i) est exécuté en commandant la distance entre les matrices supérieure et inférieure (5) de manière à la réduire ultérieurement de la deuxième réduction de distance.

7. Procédé selon l'une quelconque des revendications précédentes, dans lequel les premières données de sortie et les données de sortie intermédiaires comprennent une valeur de pression respective destinée à être appliquée par la presse durant les étapes de forgeage respectives.

8. Procédé selon l'une quelconque des revendications précédentes, dans lequel, dans les étapes (f) et (i), l'exécution du modèle d'exécution intermédiaire est exécutée par le biais de la génération de signaux de commande qui commandent l'actionnement d'au moins la presse (3) et éventuellement du manipulateur (2).

9. Procédé selon l'une quelconque des revendications précédentes, dans lequel les premières données de sortie et/ou les données de sortie intermédiaires comprennent l'actionnement du manipulateur (2) pour positionner la première portion longitudinale de la pièce dans une position donnée par rapport à la matrice.

10. Procédé selon l'une quelconque des revendications précédentes, dans lequel l'étape (d) d'acquisition de données dimensionnelles d'ébauche comprend la détection de dimensions effectives de l'ébauche en utilisant la pluralité de détecteurs de rayonnement (9) produisant des signaux électriques de sortie, la génération d'une carte dimensionnelle d'ébauche de l'ébauche (4) à partir des signaux électriques de sortie, et la transmission de la carte dimensionnelle d'ébauche à l'AIM (10), dans lequel les données dimensionnelles d'ébauche traitées dans l'étape (e) par les algorithmes de calcul adaptatifs sont la carte dimensionnelle d'ébauche.

11. Procédé selon l'une quelconque des revendications précédentes, dans lequel la pluralité de détecteurs de rayonnement (9) est un réseau de détecteurs de rayonnement infrarouge connecté à un module de traitement visuel, qui est configuré pour générer la carte dimensionnelle en traitant les signaux électriques de sortie reçus à partir des détecteurs et est connecté de manière logique à l'AIM (10) et configuré pour transmettre la carte dimensionnelle générée à l'AIM (10).

12. Procédé selon l'une quelconque des revendications précédentes, dans lequel la modélisation adaptive de l'AIM (10) utilise une programmation dynamique de la première séquence d'étapes de fonctionnement et, conformément aux données d'entrée de référence et à la carte dimensionnelle de la pièce après une étape de forgeage de la séquence, l'AIM (10) est configuré pour changer l'ordre et/ou le nombre d'étapes de fonctionnement dans la séquence.

13. Procédé selon la revendication 5, comprenant en outre, avant l'étape (h), l'acquisition de la distance effective entre la matrice supérieure (5a) et la matrice inférieure (5b) après la première étape de forgeage et la génération d'un deuxième modèle d'exécution intermédiaire comprend l'utilisation des algorithmes de calcul adaptatifs pour traiter de manière adaptative la carte dimensionnelle de la pièce détectée à la fin de la première étape de forgeage, la distance effective entre les matrices (5), et les données d'entrée de référence pour produire un modèle 3D définissant le deuxième profil intermédiaire et pour calculer des données de sortie intermédiaires.
